# EUROPEAN PATENT APPLICATION

(11) **EP 2 085 796 A1**
(43) Date of publication of application: **05.08.2009**
(21) Application number: 08300057.0
(22) Date of filing: 29.01.2008
(51) Int. Cl.: G02B 3/14

(54) **Optical lens arrangement for fixed lenses and a liquid lens**

(71) Applicant: Varioptic, 69007 Lyon (FR)
(72) Inventor: Craen, Pierre, 4053 Embourg (FR); Boulin, Yves-Sébastien, 69008, LYON (FR)
(74) Representative: de Beaumont, Michel

(57) **Abstract**

The invention concerns an optical lens arrangement including a lens barrel (304), a liquid lens (306) having a structure containing a first conductive liquid (312) and a second insulating liquid (314), the first and second liquids being immiscible, having different refractive indices and meeting each other at an interface (316) the curvature of which is controllable by a voltage applied to first and second electrodes (311, 338), wherein the structure has first and second fixed lenses (308, 310) in contact with the first and second liquids respectively; and a third fixed lens (326), wherein outer edges of the first, second and third fixed lenses are positioned in contact with respective first, second and third contact regions of the lens barrel to align the first, second and third fixed lenses with each other.

## Description

### FIELD OF THE INVENTION

The present invention relates to an optical lens arrangement for a number of fixed lenses and a liquid lens, and in particular to an optical lens arrangement comprising a lens barrel.

### BACKGROUND OF THE INVENTION

A number of embodiments of variable focus liquid lenses are described in European patent N°1166157. Figure 1 of the present application corresponds to Figure 12 of that patent and illustrates an example of a variable focus liquid lens according to the prior art.

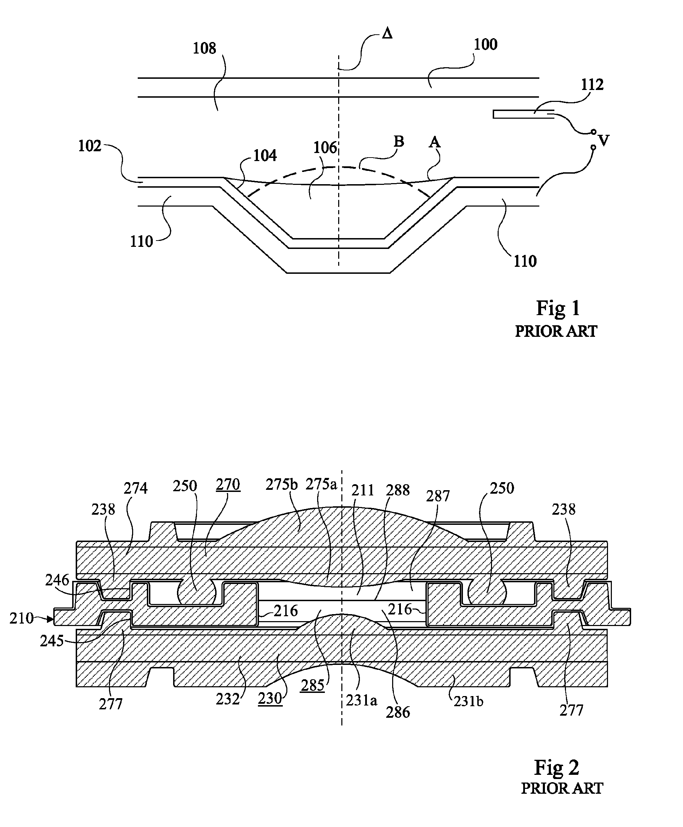

As shown in Figure 1, the variable focus lens comprises a fluid chamber with two insulating transparent plates 100 and 102 and an optical axis Δ. Plate 102 comprises a conical or cylindrical recess, with a side face 104 inclined with respect to the optical axis Δ of the device, and which receives a drop of a first liquid which is an insulating liquid 106. The remainder of the chamber extending up to transparent plate 100 is filled with a second liquid 108, which is a conducting liquid. The liquids are immiscible, and have different refraction indexes but roughly the same density, forming a refractive interface or meniscus (A, B). A transparent electrode 110 is formed over the side surface of insulating plate 102. Another electrode 112 is provided in contact with the second liquid 108.

Due to the electrowetting effect, it is possible, by applying a voltage between electrodes 110 and 112, to change the curvature of the interface between the first liquid 106 and the second liquid 108, for example, from an initial concave shape as shown by line A, to a convex shape as shown by line B. Thus, rays of light passing through the cell perpendicular to the plates 100 and 102 in the region of the drop 106 will be focused more or less depending on the voltage applied.

In order to provide a lens with sufficient power at the same time as providing a compact lens arrangement, it has been proposed to replace the windows 100 and 110 of Figure 1 with fixed lenses. This poses the problem of how to align the fixed lenses with each other, and with the liquid interface.

PCT application WO 2005/073778 relates to a variable focus lens package, and Figure 1 of that Patent application is reproduced in Figure 2 of the present application.

With reference to Figure 2, a plastic annular body 210 is provided covered by an insulating material 216, and having a through-hole 211 defining a fluid chamber 285 containing liquids 286 and 287 which meet at an interface 288. A bottom lens member 230 and a top lens member 270 sandwich the plastic annular body 210. Lens members 230, 270 respectively comprise glass-base plates 232, 274, and plastic lens bodies 231a, 231b and 275a, 275b formed on each side of the glass-base plates. These lens bodies comprise the refractive surfaces of the lens members. Lens bodies 231a and 275a further comprise positioning rings 238 and 277 respectively, which engage with an outer wall 245 and an upright wall 246 of the annular body 210 to help align the top and bottom lens members with the annular body. A sealing ring 250 is provided to seal the liquids.

A drawback with the lens arrangement of Figure 2 is that it is very difficult to maintain an acceptable level of accuracy in the alignment between the fixed lenses due to the numerous manufacturing tolerances affecting the parts linking one lens to the next. In particular, formation of the outer wall 245 and of the upright wall 246 is necessarily performed by two separate processes as these features are on opposite sides of the annular body 210, meaning that there is a risk of misalignment between these parts.

In many applications it is desirable to provide further fixed lenses in the lens system, to achieve a desired optical performance. A further drawback with the arrangement of Figure 2 is that it is very difficult to add further fixed lenses to this system which are adequately aligned with the existing fixed lenses and the annular body.

### SUMMARY OF THE INVENTION

It is an aim of embodiments of the present invention to at least partially address one or more of the needs in the

### prior art.

According to one aspect of the present invention, there is provided an optical lens arrangement comprising: a lens barrel; a liquid lens comprising a structure containing a first conductive liquid and a second insulating liquid, the first and second liquids being immiscible, having different refractive indices and meeting each other at an interface the curvature of which is controllable by a voltage applied to first and second electrodes, wherein said structure comprises first and second fixed lenses; and a third fixed lens, wherein outer edges of said first, second and third fixed lenses are positioned in contact with respective first, second and third contact regions of said lens barrel to align said first, second and third fixed lenses with each other.

According to one embodiment of the present invention, the first, second and third fixed lenses and the lens barrel have a monolithic structure.

According to another embodiment of the present invention, the structure comprises pressure compensation means for compensating for a change in volume of said liquids.

According to another embodiment of the present invention, pressure compensation means comprises at least one expansion chamber comprising an air-filled chamber connected by a channel to a chamber of said structure containing said first and second liquids.

According to another embodiment of the present invention, the first, second and third contact regions comprise cylindrical surfaces having a common axis and arranged such that the contact region closest to one end of lens barrel has a first diameter, and each other contact region from said one end towards the other end of said lens barrel, along said axis, has a diameter equal to or smaller a the previous contact region.

According to another embodiment of the present invention, the first, second and third contact regions all have equal or substantially equal diameters.

According to another embodiment of the present invention, the lens barrel comprises first and second electrical contacts coupled to said first and second electrodes of said liquid lens.

According to another embodiment of the present invention, the first electrode comprises an annular disk having a portion in contact with said first liquid and forming an optical stop of said lens arrangement.

According to another embodiment of the present invention, the lens barrel comprises a contact surface, aligned with said optical axis Δ, in contact with an edge of said liquid interface.

According to another embodiment of the present invention, the liquid lens comprises an annular lens barrel comprising a contact surface in contact with an edge of said liquid interface and wherein said first and second liquids are sealed by said annular lens barrel and said first and second fixed lenses.

According to a further aspect of the present invention, there is provided an optical device comprising: a camera module comprising the optical lens arrangement of any preceding claim positioned over an image sensor; driving circuitry for generating voltages to be applied to said first and second electrodes of said liquid lens; and a processor.

According to yet a further aspect of the present invention, there is provided lens barrel comprising: first, second and third cylindrical contact regions for receiving first, second and third fixed lenses respectively, said first, second and third contact regions sharing a common axis; and a fourth contact region positioned between two of said first, second and third contact regions and centred on said common axis, said fourth contact region for receiving the edge of a liquid interface of a liquid lens.

A method of manufacturing a lens arrangement comprising: forming a lens barrel comprising a first contact region for receiving a first fixed lens, a second contact region for receiving a second fixed lens, and a third contact region for receiving a third fixed lenses; positioning said first, second and third fixed lenses in said lens barrel in contact with said respective first, second and third contact regions, a liquid lens being formed between two of said first, second and third fixed lenses comprising a chamber containing a conductive liquid and an insulating liquid meeting at a liquid interface.

In one embodiment, the first, second and third contact regions are formed by a processing using a same cutting tool while keeping the lens barrel in the spindle of the machine during said process, or a same mould.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:
Figure 1 (describes above) illustrates schematically a liquid lens;
Figure 2 (described above)illustrates a variable focus lens package;
Figure 3 is a cross-section view of an optical lens arrangement according to an embodiment of the present invention;
Figure 4 is a cross-section view of an optical lens arrangement according to a further embodiment of the present invention;
Figure 5 is a cross-section view of an optical lens arrangement according yet a further embodiment of the present invention;
Figure 6 is a cross-section view of an optical lens arrangement according to a further embodiment of the present invention; and

Figure 7 illustrates schematically an optical device comprising an optical lens arrangement according to embodiments of the present invention.

### DETAILED DESCRIPTION OF THE INVENTION

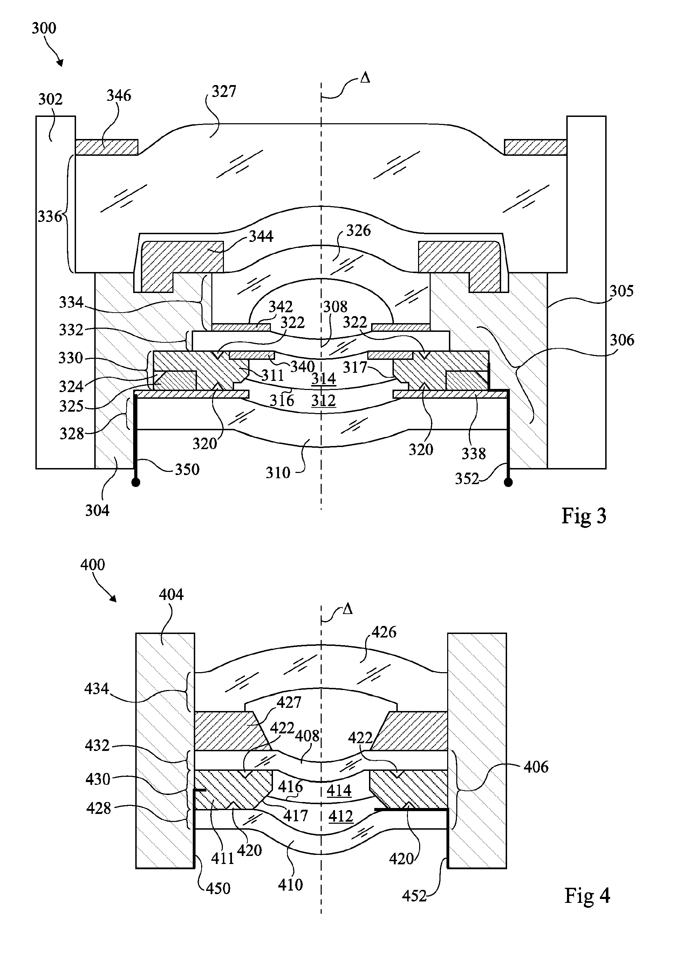

Figure 3 illustrates an optical lens arrangement 300 comprising an outer lens barrel 302 and an inner lens barrel 304 supporting a liquid lens 306 and a number of fixed lenses. The inner and outer lens barrels 302, 304 for example meet each other at a cylindrical or slightly conical interface 305, allowing the position of the inner and outer lens barrels to be adjusted with respect to each other.

The inner lens barrel 304 houses liquid lens 306 which comprises fixed lenses 308 and 310. An annular body 311 is sandwiched between these fixed lenses, defining a chamber containing a conducting liquid 312 and an insulating liquid 314, which meet at a liquid interface 316. Fixed lenses 308, 310 for example comprise hydrophilic and insulating coatings respectively deposited on their inner surfaces, where these lenses contact the liquids 314 and 312. Interface 316 for example contacts the annular body 311 on a bevelled contact surface 317, shaped like a slice of a cone, which serves to center the interface 316 with respect to the annular body 311. Liquid 314 for example comprises an oily liquid, while liquid 312 is for example based on an aqueous solution, for example water mixed with a salt. Liquids 312 and 314 have different refractive indices.

Annular body 311 is for example formed of a conductive material such as a metal, or a conductive polymer, coated with an insulating later to prevent electrical contact with the liquids in the lens. The curvature of the liquid interface 316 can be controlled by the electrowetting effect by applying a voltage between the annular body 311 and the conductive liquid 312, as will be described in more detail below.

Given that the structure containing the liquids is a solid structure sealed by the annular body 311 and fixed lenses 308, 310, deformation or even cracking of the lenses could occur in the case of a change in volume of the liquids, for example due to a change in temperature. To avoid this, expansion chambers 320 and 322 are provided, these expansion chambers for example comprising an annular groove filled with air at the time of assembly of the liquid lens, and having a small channel connecting the grooves to the main chamber of the liquid lens. In this way, in case of a change of pressure in the fluid chamber, the liquids 314, 312 can enter the expansion chamber, equalising the pressure. Such expansion chambers are for example discussed in more detail in co-pending European Patent Application number EP 06115595, which is hereby incorporated by reference to the extent allowable by the law.

In this embodiment, the annular body 311 of the liquid lens 306 is held in position by a block of glue 324 and sealed by a gasket 325 formed of a polymer material to provide a better sealing of the lens, as will be explained in more detail below.

The inner lens barrel 304 also contains a lens 326, positioned alongside the liquid lens 306. The outer lens barrel 302 contains a lens 327, positioned next to the inner lens barrel 304. Fixed lenses 308, 310, 326 and 327 are for example monolithic lenses, meaning they are made from a bulk material, such as glass or a plastic, and all have a circular form, in the plane perpendicular to their optical axes.

To ensure the alignment of the fixed lenses 308, 310 and 326 with respect to an optical axis Δ of the lens arrangement, outer surfaces of these lenses each contact with inner surfaces of the inner lens barrel 304. The fixed lenses are formed to have a very high accuracy between the positioning of their respective optical axes and their outer edges, which are cylindrical in this example. The inner lens barrel 304 is also a monolithic form, meaning that it comprises one solid mass. It may however comprise more than one material, for example if it is formed by bi-moulding. Contact regions for contact with the outer edges of each of the fixed lenses 308, 310 and 326 and with annular body 311, gasket 325 and glue 324 of the liquid lens are provided in the inner lens barrel 304. In particular, the outer edge of lens 310 contacts the inner lens barrel in a contact region 328. The annular body 311, gasket 325 and glue 324 contact with a contact region 330 of the inner lens barrel. Furthermore, the outer edge of lens 308 contacts with a contact region 332 of the inner lens barrel 304, while the outer edge of lens 326 contacts with a contact region 334 of the inner lens barrel. Lens 327 is aligned with the outer lens barrel 302 by contact between its outer edge and a contact region 336 of the outer lens barrel 302.

Thus the inner lens barrel 304 provides a single point of reference for the fixed lenses 308, 310 and 326. This allows precise alignment between these lenses. Advantageously, in this embodiment the contact surfaces 328, 330, 332 and 334 are each staggered such that they are progressively closer to the axis of the lens barrel 304. This feature means that if the inner lens barrel 304 is machined, a single cutting tool can be use to cut the contact regions 328, 330, 332 and 334 while keeping the lens barrel 304 in the spindle of the machine during all of the machining process. This allows high precision between the relative positioning of these surfaces. Alternatively, if the inner lens barrel 304 is moulded, a single mould insert, which has all of its surfaces concentric or coaxial, can be used to form all of the contact regions 328, 330, 332 and 334 again allowing high precision between the contact surfaces.

To block light reflections between the lenses in the lens arrangement 300, a number of stops are provided, formed for example of an opaque material such as a coloured plastic or the like. As illustrated, a stop 338 is provided between fixed lens 310 and the annular body 311 of the liquid lens, a stop 340 is provided between the annular body 311 and fixed lens 308, while a stop 342 is provided between fixed lens 308 and fixed lens 326. A stop 344 is provided between fixed lens 326 and 327. Finally, a stop 346 is provided on the outer surface of lens 327.

To supply a voltage between the conductive liquid 312 and the annular body 311 to control liquid lens 306, electrical contacts 350, 352 are provided. In this example, electrical contact 350 is a conductive track formed as a surface coating, for example made of gold or nickel, on one side of the inner surface of the inner lens barrel 304, which contacts stop 338. Stop 338 is formed of a conductive material such as metal or a conductive polymer, and contacts the conducting liquid 312. Advantageously, by providing a stop that also forms an electrode of the lens, a simple structure can be achieved, facilitating manufacture of the lens. Contact 352 contacts with the annular lens body 311, and is for example a conducting track formed as a surface coating on the inner surface of the inner lens barrel 304 and on a small portion of fixed lens 308. It can be coated by an insulating layer to prevent contact with stop 338. In alternative embodiments, the conductive tracks could be wires formed inside the walls of the inner lens barrel.

The fixed lenses of liquid lens 306 are for example sealed by glue, for example by gluing fixed lens 310 in contact region 328 and fixed lens 308 in contact region 332. An advantage of gluing the lenses in these regions is that the glue is relatively far from the main chamber containing the liquids. Therefore undesirable chemical reactions, leading for example to clouding of the liquids, between glue 324 and the liquids that can change critical parameters of the liquid lens 306 do not occur. Alternatively or additionally, a soft polymer coating such as Sifel could be applied to the surfaces to be sealed. A crimping mechanism could be provided to apply pressure and seal the lens. For example, fixed lens 310 could be crimped in position by deforming the edge of the inner lens barrel inwards towards the axis Δ. Alternatively, a deformable washer could be press-fitted to crimp fixed lens 310 in position.

Figure 4 illustrates an optical lens arrangement 400 comprising a conical or cylindrical lens barrel 404. A liquid lens 406 and a number of fixed lenses are housed within the lens barrel 404. The liquid lens 406 comprises a fixed lens 408, a fixed lens 410 and an annular body 411 sandwich between the two lenses 408, 410. A chamber defined by the annular body 411 and the lenses 408, 410 contains liquids 412 and 414 which meet in an interface 416. Fixed lenses 408, 410 for example comprise hydrophilic and insulating coatings respectively deposited on their inner surfaces, where these lenses contact the liquids 414 and 12. Interface 416 for example contacts the annular body 411 on a bevelled contact surface 417, which serves to centre the interface 416 with respect to the annular body 411. Liquids 412, 414 are for example the same as liquids 312, 314 of Figure 3, and will not be described again in detail.

As with the embodiment of Figure 3, expansion chambers 420 and 422 are provided, which are similar to chambers 320 and 322 and will not be described again in detail.

A fixed lens 426 is also provided in the lens barrel 404, separated from fixed lens 408 by an annular stop 427. In this embodiment lenses 408, 410 and 426 all have substantially the same outer diameter, slight variations being possible due to a draft angle of the inner surface of the lens barrel 404, which could give it a slightly conical form.

Lenses 410, 418 and 426 as well as the annular body 411 are all aligned by contact between their outer edges and the inner surface of the cylindrical lens barrel 404. In particular, the outer edge of fixed lens 410 contacts a contact region 428 of the inner surface of lens barrel 404, while outer edges of annular body 411 and fixed lenses 408, 426 contact with contact regions 430, 432 and 434 respectively of the inner surface of lens barrel 404.

The simplicity of the inner surface of lens barrel 404 makes it easy to manufacture. Furthermore, the inner surface of lens barrel 404 can be the made, as described for the lens barrel of Figure 3, providing a high precision between the positioning of the contact regions 428 to 434.

Electrical contacts 450, 452 are provided for making electrical contact with the annular body 411 and the conductive liquid 412 respectively. In this example, contact 450 is formed of a conductive coating on the inner surface of the lens barrel 404, while contact 452 is formed of a conductive coating on the inner surface of lens barrel 404, and a conductive coating on the surface of annular body 411, insulated from the annular body by an insulating layer.

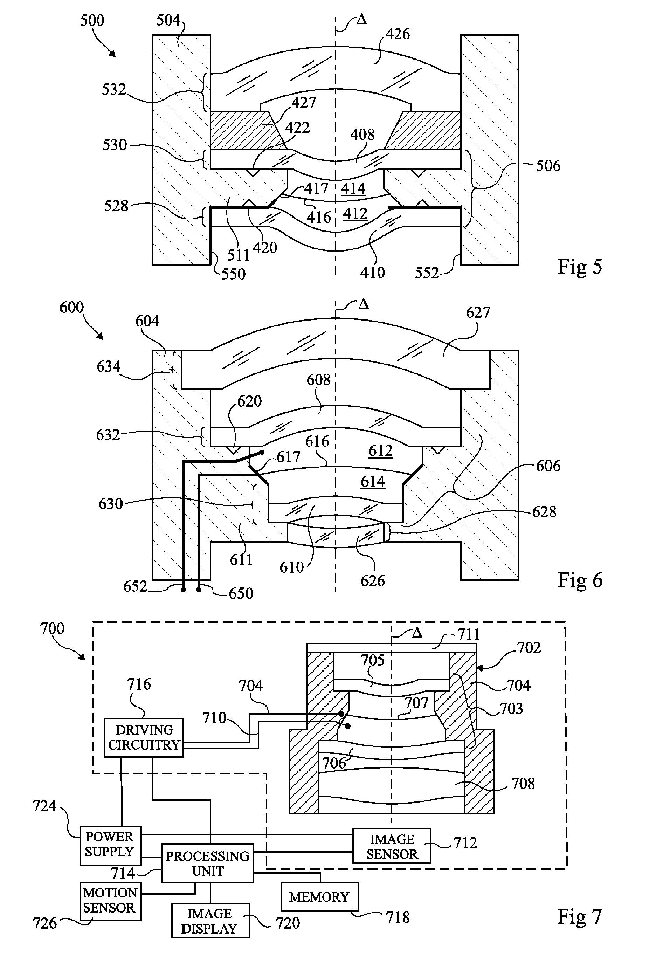

Figure 5 illustrates an optical lens arrangement 500 comprising a lens barrel 504, supporting a liquid lens 506 and a further fixed lens 426. Liquid lens 506 comprises fixed lenses 408, 410 and. The fixed lenses 408, 410, 426 and liquid lens 506 are the same as those in Figure 4, except that the annular body of the liquid lens, labelled 511 in Figure 5, is part of the lens barrel 504 in this embodiment. Fixed lenses 408, 410 and 426 are aligned by contact with respective contact regions 528, 530 and 532 of the inner surface of lens barrel 504.

As illustrated, the annular body 511 of the liquid lens 506 extends from the inner surface of the lens barrel 504, and comprises bevelled contact surface 417 of the liquid lens for supporting the liquid interface 416. This embodiment advantageously provides precise alignment of the liquid interface 416 with respect to the fixed lenses 408, 410 and 426, as contact surface 417 is formed from the same monolithic form as the contact regions 528, 532 and 534 on the inner surface of lens barrel 504 for the fixed lenses 410, 408 and 426 respectively. Furthermore, it is possible to form the contact surface 417 and the contact region 528 using a single cutting tool or a single mould insert as described for the lens barrel of Figure 3, ensuring precise alignment between the liquid interface and fixed lens 410.

In the embodiment of Figure 5, the contact surface 417 is formed of an insulating layer covering a conductive layer forming an electrode of the lens, which is in turn coating the lens barrel, which is for example formed of plastic. A contact 550, formed of a conductive coating on the inner surface of lens barrel 504, provides electrical contact to this electrode. A further contact 552 is provided for making electrical contact with the conductive liquid, and comprises a conductive coating on the inner surface of the lens barrel 504. In alternative embodiments, the lens barrel could be formed of a conductive polymer material, or alternative conductive material, such that it forms the electrode insulated from the liquids, and in this case no contact 550 would be needed as contact could be made with the lens barrel 504 directly. In this case, contact 552 is insulated from the lens barrel 504 by an insulating layer, or by a gasket washer and plastic over-moulding covering the electrode.

The embodiments of Figures 4 and 5 could includes one or more additional fixed lenses positioned at either end of the lens barrel.

Figure 6 illustrates an optical lens arrangement 600 comprising a lens barrel 604 and a liquid lens 606. In this embodiment, the lens barrel 604 has a protruding portion 611 extending from its inner surface which not only comprises a bevelled contact surface 617 for supporting a liquid interface 616 of the liquid lens 606, but also surfaces for supporting and aligning fixed lenses, as will now be described.

Liquid lens 606 comprises fixed lenses 608 and 610, traversing the lens barrel 604 at different points along the axis of the lens barrel, and defining a chamber between them containing liquids 612 and 614. Liquids 612 and 614 are for example the same as liquids 312, 314 described above, and meet at an interface 616, which contacts with the bevelled surface 617, as described above. Fixed lenses 608, 610 for example comprise hydrophilic and insulating coatings respectively deposited on their inner surfaces, where these lenses contact the liquids 614 and 612. Fixed lens 608 has a larger diameter than that of the chamber containing liquids 612, 614, and is position at a step change in the diameter of the inner surface of the lens barrel 604, such that is glued or otherwise fixed to a surface perpendicular to the axis of the lens barrel at the end of the chamber. An expansion chamber 620 is for example provided in this perpendicular surface as illustrated. In this embodiment, only one expansion chamber is provided. Fixed lens 610 on the other hand has a diameter equal to the smallest diameter of the chamber, and is positioned at the other end of the chamber. A further fixed lens 626 is provided having an even smaller diameter, and position in a portion of the lens barrel adjacent to fixed lens 610. Furthermore, a fixed lens 627 is position at the other end of the lens barrel having an even large diameter.

The outer edges of fixed lenses 626, 610, 608 and 627 contact regions 628, 630, 632 and 634 respectively of the inner surface of lens barrel 604, and are thus aligned with respect to each other by the lens barrel 604 which acts as a single reference for all of these lenses. Furthermore, in this embodiment, all of the contact regions are advantageously formed, if machined, using a single cutting tool while keeping the lens barrel 604 in the spindle of the machine during the whole machining process, or using a single mould insert having all of its surfaces concentric or coaxial. This is possible as, starting from the widest end of the lens barrel, the diameter of the opening always reduces towards the farthest contact region, in this case region 628, meaning that from the widest side of the lens barrel all the contact regions can be viewed by a cutting machine or mould insert.

Again, the electrode insulated from the liquids can be formed by a conductive coating applied to surface 617, and covered by an insulating layer. Contact with this electrode is for example made by means of a contact 650 that is formed within the wall of the lens barrel 604. Likewise, electrical contact with the conductive liquid 614 can be made by a contact 652 formed with the wall of the lens barrel 604.

The lens arrangements of Figures 3, 4, 5 and 6 can be used in conjunction with an image sensor to provide a camera module for receiving and capturing images. In this case, the lens arrangements are for example positioned over an image sensor with lens 327, 426, or 627 closest to the image sensor.

Examples of processes for manufacturing the lens arrangements of Figures 3 to 6 will now be described. In these examples, the lenses including the liquid lens are assembled in the lens barrels.

In the embodiment of Figure 3, the liquid lens 306 is first formed in the inner lens barrel 304. Fixed lens 308 is first placed in position, followed by the other components of the liquid lens which are placed in position one by one, starting with lens stop 340, annular body 311, which is glued in position by glue 324, lens stop 338 and finally fixed lens 310. To form the liquid lens, once the annular body 311 is in position, an insulating layer is deposited on the body 311 and the fixed lens 308 and then the drop of liquid 314 is placed in the chamber, and then the inner lens barrel is for example submerged in liquid 312, while the lens stop 338 and fixed lens 310 are placed in position, which seal the chamber, sealing the liquids within. After the liquid lens 306 is formed, the stop 342 is placed and the fixed lens 326 is placed and fixed in the inner lens barrel 304, for example with glue, or by pressure if the is a close enough fit between the edge of the lens 326 and the inner lens barrel 304.

In embodiments of Figure 4 and 5, fixed lens 408 is for example the first lenses to be glued or otherwise fixed in position, followed by, in the case of Figure 4 the annular body 411. In the embodiment of Figure 5, the annular body 511 is already incorporated with the lens barrel 504. An insulating layer is placed on the body 511 and fixed lens 408 before the drop of liquid 414 is placed in the chamber, and the lens arrangement for example submerged in liquid 412 while fixed lens 410 is placed in position, sealing the chamber. The lens stop 417 and fixed lens 426 can then be fixed in position.

In the embodiment of Figure 6, fixed lens 610 is for example the first lens to be placed in position. Then a drop of the liquid 612 can be placed in the open chamber, before the lens arrangement is submerged in liquid 614 and fixed lens 608 placed in position. Then the fixed lenses 626 and 627 can be positioned.

While in the above methods the liquid lens is formed first, as this advantageously avoids interface with the fixed lenses while the liquid lens is formed, in alternative embodiments, one or more of the other fixed lenses could be positioned before the liquid lens is formed.

An advantage of the method of assembling the lens arrangements as described above is that assembly can be performed in a simple fashion, and alignment of the lens is achieved without requiring additional processes to ensure alignment.

Figure 7 illustrates an example of a camera module 700 of an optical device incorporating a lens arrangement 702 of variable focal length having a liquid lens 703 and a number of fixed lenses supported in a barrel 704. Optical device 700 is for example a digital camera, a mobile telephone, a microscope or the like. The liquid lens 703 for example comprises fixed lenses 705 and 706, and a further fixed lens 708 supported in the lens barrel, and additional lenses could be included. A protective transparent plate 711 covers the end of the lens arrangement to prevent dust from entering.

The liquid lens 703 is supplied with voltage signals for controlling the liquid interface by two contacts 709 and 710. The lens arrangement 702 is positioned over an image sensor 712, which is in turn connected to a processing unit 714. The processing unit controls driving circuitry 716, which is connected to the contacts 709 and 710 for driving the liquid lens. The processing unit 714 is also connected to a memory 718, to an image display 720, to a power supply 724 and to an optional motion sensor 726.

In operation, the signal provided by the image sensor is for example used by the processing unit 714 to determine focusing that is required to focus an image on the image sensor 712. The processing unit provides control signals to control the driving circuitry 716 to generate required voltages on contacts 709 and 710. During capture of an image, a motion sensor 726 can be provided to determine whether any movement of the camera is present, and such movements can be corrected, for example using the image sensor or in the case that further electrical contacts are provided with the liquid lens, the liquid interface could be made to compensate the motion by adjusting the optical axis Δ of the lens arrangement. Once the image is captured, it is displayed on image display 720.

Thus optical lens arrangements have been described in which a liquid lens is formed between two fixed lenses positioned inside a lens barrel, and a third fixed lens is also provided inside the lens barrel, all of the fixed lenses having an outer edge contacting a contact region of the lens barrel, thereby aligning the fixed lens with respect to each other.

An advantage of the embodiments described herein is that by forming the lens barrel having contact surfaces in direct contact with the fixed lenses, the fixed lenses can have a very accurate positioning with respect to each other. In particular, tolerances of less than 5µm can be achieved in a direction perpendicular to optical axes Δ. In other words, displacement of any lens from its correctly aligned position is not greater than 5 µm. The same tolerances can be achieved for the positioning of the fixed lenses along the optical axis Δ. Furthermore, tolerances of between 0.1 and 0.2 degrees of parallelism can be achieved between the lenses.

A further advantage embodiments described herein is that the lenses are aligned using their outer edges, meaning that a very simple structure of the lenses can be used. This means that glass lenses can be used, whereas in more complex designs such as that of Figure 2, a hybrid glass plastic lens is required.

The difficulty of providing a liquid lens sealed between fixed lenses that are fixed directly within a lens barrel is that no movement of the fixed lenses occurs to compensate for expansion of the liquid. Advantageously, embodiments described herein include means for compensating for expansion of the liquids in the form of expansion chambers. In alternative embodiments, different forms of compensation could be used, such as using a flexible sealing ring to seal the liquid lens, the sealing ring being able to expand to allow for changes in pressure of the liquids.

While a number of specific embodiments have been described above, it will be apparent to those skilled in the art that there are numerous alternatives that could be applied.

For example, the fixed lenses described in the various embodiments can be made of glass, or of plastic, and are preferably monolithic meaning that their outer edges and the refractive surfaces of the lenses are formed of the same bulk material, thereby ensuring high precision between the positioning of these surfaces.

It will also be apparent those skilled in the art that while the figures show convex or concave lenses, the combination of fixed lenses and their types will depend on the application in which lenses are provided, and various combinations are possible. In particular, planar-convex or planar-concave lenses could be used, for example, in the case of the fixed lenses of the liquid lens, having the planar sides in contact with the liquids. Furthermore, one or more additional lenses could be provided in any of the embodiments.

While in the embodiments described above the liquid lens comprises a single liquid interface, in alternative embodiments further liquid interfaces could be provided, in one or more chambers.

Furthermore, while in the various embodiments different techniques for fixing the lenses in position have been described, in a given lens arrangement a combination of these techniques could be used for different fixing different lenses. Possible techniques for fixing and sealing the lenses include the use of glue, of welding the lenses by heat, of applying force, for example by crimping, to hold the lenses in position, and using the compression of gaskets or soft materials to seal the liquid lens.

While various features and alternatives have been described in the various embodiments, it will be readily apparent to those skilled in the art that in different embodiments these features may be combined in any combination.

## Claims

1. Optical lens arrangement comprising:
a lens barrel (304, 404, 504, 604);
a liquid lens (306, 406, 606) comprising a structure containing a first conductive liquid (312, 412, 612) and a second insulating liquid (314, 414, 614), the first and second liquids being immiscible, having different refractive indices and meeting each other at an interface (316, 416, 616) the curvature of which is controllable by a voltage applied to first and second electrodes (311, 338, 411, 452, 552, 611, 652), wherein said structure comprises first and second fixed lenses (308, 310, 408, 410, 608, 610); and
a third fixed lens (326, 426, 626), wherein outer edges of said first, second and third fixed lenses are positioned in contact with respective first, second and third contact regions of said lens barrel to align said first, second and third fixed lenses with each other.

2. The optical lens arrangement of claim 1, wherein said first, second and third fixed lenses and the lens barrel have a monolithic structure.

3. The optical lens arrangement of claim 1 or 2, wherein said structure comprises pressure compensation means for compensating for a change in volume of said liquids.

4. The optical lens arrangement of claim 3, wherein said pressure compensation means comprises at least one expansion chamber (320, 322, 420, 422, 620) comprising an air-filled chamber connected by a channel to a chamber of said structure containing said first and second liquids.

5. The optical lens arrangement of any preceding claims, wherein said first, second and third contact regions comprise cylindrical surfaces having a common axis and arranged such that the contact region closest to one end of said lens barrel has a first diameter, and each other contact region from said one end towards the other end of said lens barrel, along said axis, has a diameter equal to or smaller a the previous contact region.

6. The optical lens arrangement of claim 5, wherein said first, second and third contact regions all have equal diameters.

7. The optical lens arrangement of any preceding claim, wherein said lens barrel comprises first and second electrical contacts coupled to said first and second electrodes of said liquid lens.

8. The optical lens arrangement of any preceding claim, wherein said first electrode comprises an annular disk (338) having a portion in contact with said first liquid and forming an optical stop of said lens arrangement.

9. The optical lens arrangement of any preceding claim, wherein said lens barrel comprises a contact surface (417, 617), aligned with said optical axis Δ, in contact with an edge of said liquid interface (416, 616).

10. The optical lens arrangement of any preceding claim, wherein said liquid lens comprises an annular lens barrel (311, 411) comprising a contact surface (317, 417) in contact with an edge of said liquid interface (316, 416) and wherein said first and second liquids are sealed by said annular lens barrel and said first and second fixed lenses.

11. An optical device comprising:
a camera module (702) comprising the optical lens arrangement of any preceding claim positioned over an image sensor (712);
driving circuitry (716) for generating voltages to be applied to said first and second electrodes of said liquid lens; and
a processor.

12. A lens barrel comprising:
first, second and third cylindrical contact regions (328, 330, 332, 428, 430, 432, 628, 630, 632) for receiving first, second and third fixed lenses (308, 310, 326, 408, 410, 426, 608, 610, 626) respectively, said first, second and third contact regions sharing a common axis; and
a fourth contact region (317, 417, 617) positioned between two of said first, second and third contact regions and centred on said common axis, said fourth contact region for receiving the edge of a liquid interface of a liquid lens.

13. A method of manufacturing a lens arrangement comprising:
forming a lens barrel (304, 404, 604) comprising a first contact region (328, 428, 628) for receiving a first fixed lens (310, 410, 626), a second contact region (330, 430, 630) for receiving a second fixed lens (308, 408, 610), and a third contact region (332, 432, 632) for receiving a third fixed lenses (326, 426, 608);
positioning said first, second and third fixed lenses in said lens barrel in contact with said respective first, second and third contact regions, a liquid lens being formed between two of said first, second and third fixed lenses comprising a chamber containing a conductive liquid (312, 412, 612) and an insulating liquid (314, 414, 614) meeting at a liquid interface (316, 416, 616).
